# EUROPEAN PATENT APPLICATION

(11) **EP 2 104 099 A1**
(43) Date of publication of application: **23.09.2009**
(21) Application number: 08166100.1
(22) Date of filing: 08.10.2008
(51) Int. Cl.: G11B 19/12

(54) **Optical disc drive and method of controlling the same**

(30) Priority: 17.03.2008 KR 20080024455
(71) Applicant: Samsung Electronics Co., Ltd., Suwon-si Gyeonggi-do 443-742 (KR)
(72) Inventor: Uto, Toshiki, Gyeonggi-do 821-1101 (KR)
(74) Representative: Grootscholten, Johannes A.M.

(57) **Abstract**

A method of controlling an optical disc drive in which determining an organic optical disc using a tracking control polarity (in-groove polarity) of the organic optical disc and a reflection amount characteristic (low to high characteristic) after recording and improving the determination speed of the optical disc is possible. The method of controlling an optical disc drive includes detecting a first average value (418) and a second average value (420) of a differential phase detection tracking error (DPD TE) signal of a loaded optical disc, and determining the type of the loaded optical disc by comparison between the first average value and the second average value of the DPD TE signal.

## Description

### BACKGROUND OF THE INVENTION

### 1. Field of the Invention

The present general inventive concept relates to an optical disc drive, and, more particularly, to an optical disc drive to reproduce an organic optical disc and an inorganic optical disc and a method of controlling the same.

### 2. Description of the Related Art

Subsequent to a compact disc (CD) and a digital versatile disc (DVD), a blu-ray disc (hereinafter, referred to as "BD") has been introduced as a next-generation high-capacity recording medium. The BD can store data of about 25 GB. When the BD is manufactured in a dual layer, the BD can store video and audio data of about 50 GB.

The BD is divided into a BD in which a surface of a data recording layer is coated with an organic material and a BD in which the surface of a data recording layer is coated with an inorganic material. Since the organic BD and the inorganic BD have opposite tracking control polarities and different light reflection amount characteristics at the surface of the data recording layer, a determination is made whether a loaded optical disc is the organic BD or the inorganic BD, in order to accurately reproduce data from the organic BD or the inorganic BD.

As the existing method of determining a type of the optical disc, a method of performing tracking control and wobble signal amplitude measurement of an on-groove polarity with respect to an optical disc, performing tracking control and wobble signal amplitude measurement of an in-groove polarity, comparing the amplitude of the wobble signal having the on-groove polarity with the amplitude of the wobble signal having the in-groove polarity, and determining the tracking control polarity of the wobble signal having a larger amplitude as a tracking control polarity of the optical disc has been used.

However, in the existing method, since the amplitude of the wobble signal is measured while changing the tracking control polarity, determining the type of the optical disc takes a lot of time.

In particular, in the inorganic optical disc, since a wobble signal having an in-groove polarity and a wobble signal having an on-groove polarity are significantly different from each other, it is easy to distinguish between the wobble signals is easy. In contrast, in the organic optical disc, since the amplitude of a wobble signal having an in-groove polarity is similar to the amplitude of a wobble signal having an on-groove polarity, determining the type of the optical disc only by the amplitudes of the wobble signals is difficult.

### SUMMARY OF THE INVENTION

The present general inventive concept provides determining an organic optical disc using a tracking control polarity (in-groove polarity) of the organic optical disc and a reflection amount characteristic (low to high characteristic) after recording and improves the determination speed of the optical disc.

The present general inventive concept also provides determining an organic optical disc using a tracking control polarity (in-groove polarity) of the organic optical disc and a reflection amount characteristic (low to high characteristic) after recording and improving the determination speed of the optical disc. In particular, since the speed to determine the type of the optical disc is improved, data can be accurately reproduced and a reproduction speed can be improved.

Additional aspects and/or utilities of the present general inventive concept will be set forth in part in the description which follows and, in part, will be obvious from the description, or may be learned by practice of the general inventive concept.

The foregoing and/or other aspects and utilities of the general inventive concept may also be achieved by providing a method of controlling an optical disc drive, the method comprising: detecting a first average value and a second average value of a differential phase detection tracking error (DPD TE) signal of a loaded optical disc, and determining a type of the loaded optical disc by a comparison between the first average value and the second average value of the DPD TE signal.

The detecting of the first average value and the second average value may include converting a push-pull tracking error (PP TE) signal of the loaded optical disc into a switching signal having a pulse form, detecting the first average value of the DPD TE signal in a high level period of the switching signal, and detecting the second average value of the DPD TE signal in a low level period of the switching signal.

If the first average value is larger than the second average value, a determination may be made that the type of the loaded optical disc is an organic optical disc.

The organic optical disc may be an organic optical disc on which data is recorded.

The organic optical disc may be an organic blu-ray disc recordable (BD-R) on which data is recorded.

Focusing control of the loaded optical disc may be performed before determining the type of the optical disc.

Tracking control may be performed according to a characteristic of the optical disc after determining the type of the optical disc.

The foregoing and/or other aspects and utilities of the general inventive concept may also be achieved by providing an optical disc drive including an optical disc type detector to detect a type of a loaded optical disc by a comparison between a first average value and a second average value of a differential phase detection tracking error (DPD TE) signal of the loaded optical disc, and a controller to reproduce data from the loaded optical disc on a basis of the detected result of the optical disc type detector.

The optical disc type detector may include a switching signal generator to convert a push-pull tracking error (PP TE) signal into a switching signal having a pulse form, and an average value detector to compare the first average value of the DPD TE signal in a high level period of the switching signal and the second average value of the DPD TE signal in a low level period of the switching signal and generate an optical disc type detection signal indicating the type of the optical disc according to the compared result.

The switching signal generator may include a high pass filter (HPF) to eliminate a direct current (DC) component of the PP TE signal, and a pulse generator to convert the PP TE signal, from which the DC component is eliminated, into a pulse signal.

The average value detector may include a first average value detector to detect the first average value, a second average value detector to detect the second average value, and a comparator to compare the first average value with the second average value and generate the optical disc type detection signal according to the compared result.

The average value detector may further include a switch which is controlled by the switching signal, allows the DPD TE signal to be input to the first average value detector when the PP TE signal is in a high level period, and allows the DPD TE signal to be input to the second average value detector when the PP TE signal is in a low level period.

The comparator may activate and output the optical disc type detection signal when the first average value is larger than the second average value.

When the optical disc type detection signal is activated, a determination may be made that the type of the loaded optical disc is an organic optical disc.

The organic optical disc may be an organic blu-ray disc recordable (BD-R) on which data is recorded.

The controller may perform focusing control of the loaded optical disc before determining the type of the optical disc.

The controller may perform tracking control according to a characteristic of the optical disc after determining the type of the optical disc.

The foregoing and/or other aspects and utilities of the general inventive concept may also be achieved by providing an optical disc drive including a spindle to receive an optical disc, and an optical disc type detector to detect a type of the optical disc received by the spindle, wherein the detection is based on one or more of a tracking control polarity and a light reflection amount characteristic from a surface of a recording layer of the optical disc.

The type of optical disc may include one of an organic optical disc and an in organic optical disc.

The foregoing and/or other aspects and utilities of the general inventive concept may also be achieved by providing a method of detecting an optical disc, the method including receiving an optical disc, and detecting a type of the optical disc received based on one or more of a tracking control polarity and a light reflection amount characteristic from a surface of a recording layer of the optical disc.

The foregoing and/or other aspects and utilities of the general inventive concept may also be achieved by providing a computer-readable recording medium having embodied thereon a computer program to execute a method, wherein the detection is based on one or more of a tracking control polarity and a light reflection amount characteristic from a surface of a recording layer of the optical disc.

### BRIEF DESCRIPTION OF THE DRAWINGS

These and/or other aspects and utilities of the present general inventive concept will become apparent and more readily appreciated from the following description of the embodiments, taken in conjunction with the accompanying drawings of which:
FIG. 1 is a view illustrating an outer appearance of an optical disc according to an embodiment of the present general inventive concept;
FIG. 2 is a view illustrating a cross section of the optical disc illustrated in FIG. 1;
FIG. 3 is a block diagram illustrating an optical disc drive according to an embodiment of the present general inventive concept;
FIG. 4 is a block diagram illustrating an optical disc type detector illustrated in FIG. 3;
FIGS. 5A-5H are views illustrating detecting the type of the optical disc in the optical disc type detector illustrated in FIG. 4; and
FIG. 6 is a flowchart illustrating a method of controlling an optical disc drive according to an embodiment of the present general inventive concept.

### DETAILED DESCRIPTION OF THE PREFERRED EMBODIMENTS

Reference will now be made in detail to embodiments of the present general inventive concept, examples of which are illustrated in the accompanying drawings, wherein like reference numerals refer to the like elements throughout. The embodiments are described below to explain the present general inventive concept by referring to the figures.

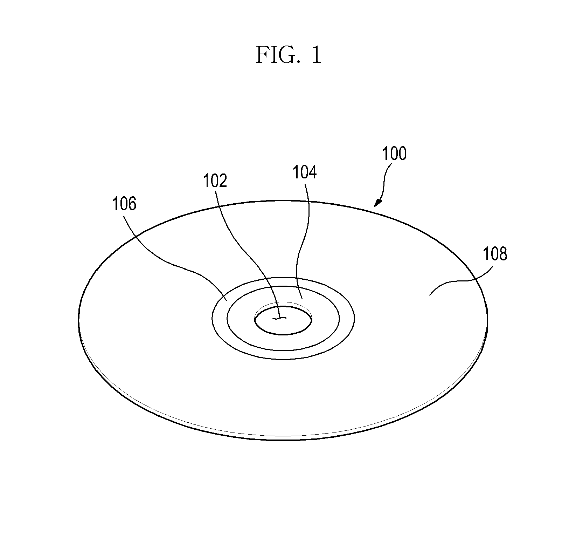

Exemplary embodiments of the present general inventive concept will be described with reference to FIGS. 1 to 6. FIG. 1 is a view illustrating an outer appearance of an optical disc according to an embodiment of the present general inventive concept. As illustrated in FIG. 1, a clamping hole 102 into which one end of a rotary shaft to rotate an optical disc 100 is inserted is provided in a central portion of the optical disc 100 having a recording layer to record information. A clamping portion 104 to fix the rotated optical disc 100 is provided at a peripheral portion of the clamping hole 102. A power calibration area (PCA) 106 and an information area 108 are sequentially provided at the peripheral portion of the claiming portion 104 from an inner circumference to an outer circumference of the optical disc 100.

The PCA 106 is a test area to optimize laser power irradiated onto an information recording surface of the optical disc 100 when information is recorded/reproduced/erased on/from the optical disc 100. Whenever power calibration is performed, a space of the PCA 106 is reduced and a number of times of calibration is counted and recorded.

The information area 108 is an area to record information to be substantially stored and includes at least one lead-in area, at least one information area and at least one lead-out area, which are sequentially provided when information is recorded. If an optical disc 100 and a recording apparatus to realize multi-session are used, groups of the read-in area, the information area and the read-out area of a number proportional to a number of times of multi-session exist in the information area 108.

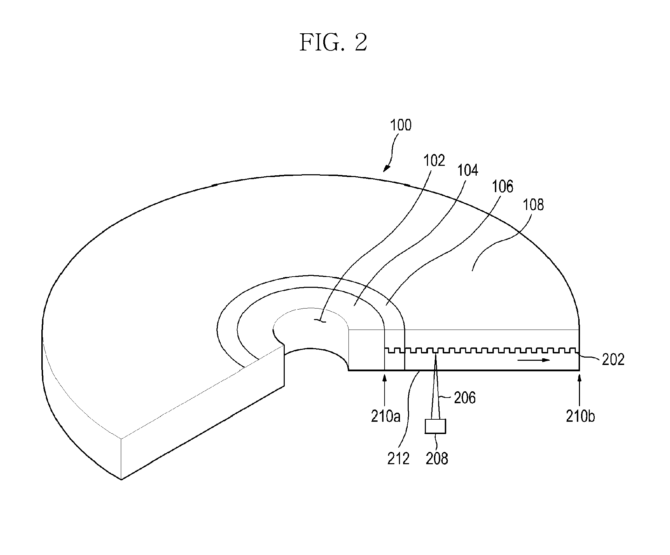

FIG. 2 is a view illustrating a cross section of the optical disc illustrated in FIG. 1. As illustrated in FIG. 2, the optical disc 100 according to the embodiment of the present general inventive concept has a recording layer 202 to record information. A protective layer 212 to protect the recording layer 202 from external impact is formed on the surface of the recording layer 202, and the surface of the protective layer 212 becomes the surface of the disc 100.

Consecutive spiral tracks in which the information is recorded are formed on the recording layer 202 of the optical disc 100 according to the embodiment of the present general inventive concept, and a pickup module 208 irradiates laser 206 onto the tracks of the recording layer 202 from an inner circumference 210a to an outer circumference 210b or from the outer circumference 210b to the inner circumference 210a of the optical disc 100 to record/reproduce/erase the information.

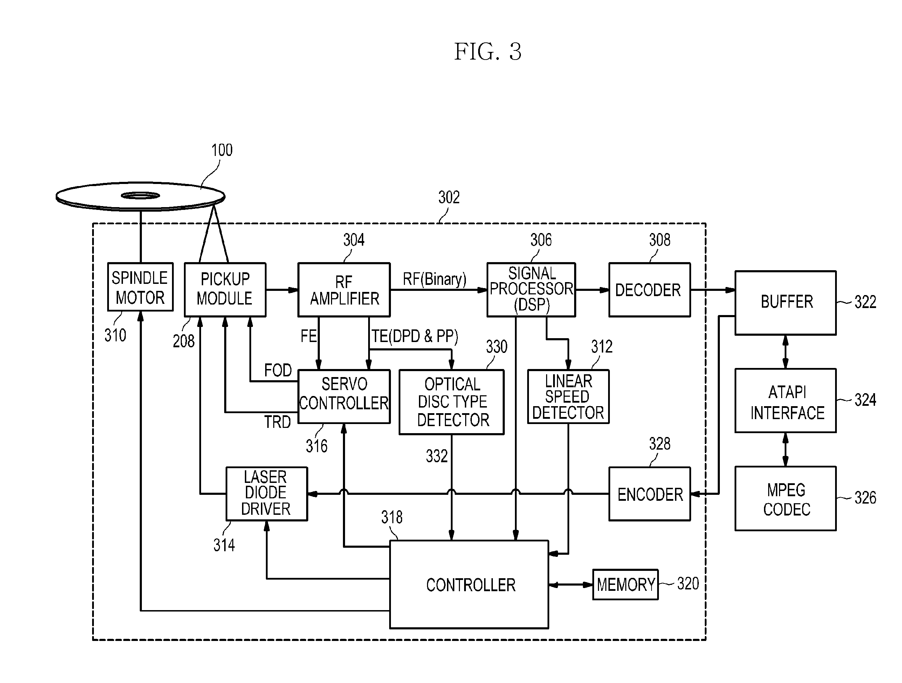

FIG. 3 is a block diagram illustrating an optical disc drive according to an embodiment of the present general inventive concept. In FIG. 3, an optical disc drive 302, a buffer 322, an advanced technology attachment packet interface (ATAPI) 324 and an MPEG CODEC 326 are components of an apparatus in which the optical disc drive 302 is mounted (for example, a DVD player, a computer main body or the like). If necessary, in another embodiment, the buffer 322, the ATAPI interface 324 and the MPEG CODEC 326 may be included in the optical disc drive 302. The ATAPI interface 324 is one of representative data communication interfaces between the optical disc drive 302 and a CODEC chip 326.

As illustrated in FIG. 3, the optical disc 100 is rotated by driving a spindle motor 310. The spindle motor 310 is controlled by a driving signal generated by a controller 318 so as to rotate the optical disc 100.

The pickup module 208 includes a laser diode, records information on the optical disc 100 by irradiating laser having recording power onto the recording surface of the optical disc 100 using the laser diode and reproduces (reads) information recorded on the optical disc 100 by irradiating laser having reproduction power. When information is erased, erasing power is used.

When information is recorded on the optical disc 100, recorded information is encoded by an encoder 328 and the encoded information is provided to a laser diode driver 314. The controller 318 provides a driving signal to record the encoded information on the information recording surface of the optical disc 100 to the laser diode driver 314 so as to change the recording power of the laser diode.

When the information recorded on the optical disc 100 is reproduced, the controller 318 controls the laser diode in the pickup module 208 to generate laser having the reproduction power such that the laser is irradiated onto the surface of the information recording layer of the optical disc 100. The laser irradiated onto the optical disc 100 is reflected from the surface of the information recording layer and is received by a light receiving portion (e.g., a photodiode) in the pickup module 208. The light receiving portion generates a RF signal corresponding to the amount of received light. An RF amplifier 304 receives the RF signal, amplifies the RF signal, and converts the amplified RF signal into a binary signal. The binary signal converted by the RF amplifier 304 is restored to digital data by a signal processor 306. Since the restored digital data is in an encoded state, the restored digital data is decoded to digital data before encoding by a decoder 308. The signal processor 306 calculates a beta (β) value, a gamma (y) value, a peak value, a bottom value and an average value from the RF signal and provides the respective values to the controller 318. A linear speed detector 312 detects the linear speed of the rotated optical disc 100 and provides the linear speed to the controller 318.

The RF amplifier 304 extracts a tracking error (TE) signal and a focus error (FE) signal from the received RF signal and provides the respective signals to a servo controller 316. The extracted TE signal includes a differential phase detection TE signal (hereinafter, referred to as a DPD TE signal) and a push-pull TE signal (hereinafter, referred to as a PP TE signal).

The servo controller 316 generates a focus driving signal FOD on a basis of the FE signal and performs focus servo control of the pickup module 208. The focus driving signal FOD is a signal to drive a focus actuator to move an objective lens in the pickup module 208. The focus actuator controls the objective lens to follow the surface of the recording layer 202 in a normal direction of the surface of the recording layer while vibrating. The focus driving signal FOD is also a signal to mechanically move the objective lens in an optical axis direction which is the normal direction of the surface 212 of the disc. The mechanical movement is made for the adjustment of a distance between the objective lens and the optical disc 100 unlike the movement of the focus actuator along the surfaces of the recording layers 202 and 204. The servo controller 316 generates a tracking driving signal TRD on a basis of the TE signal and performs tracking control of the pickup module 208, when the determination of the type of the optical disc according to the present general inventive concept is completed after the focus servo control.

An optical disc type detector 330 detects the type of the optical disc 100 which is currently loaded, that is, whether the optical disc is an organic optical disc or an inorganic optical disc. The surface of the data recording layer of the organic optical disc is coated with an organic color material and the surface of the data recording layer of the inorganic optical disc is coated with an inorganic color material. Since the two types of optical discs are different from each other in data recording/reproduction/erasing characteristics, the type of the disc needs to be accurately determined to accurately record/reproduce/erase the data. The optical disc type detector 330 detects the type of the optical disc 100 which is currently loaded, that is, detects whether the optical disc is an organic blu-ray disc recordable (BD-R) on which data is recorded, and generates an activated optical disc type detection signal 332 if the optical disc is the organic BD-R on which data is recorded.

The controller 318 controls an entire operation of the optical disc drive 302 and stores information necessary to control the entire operation of the optical disc drive 302 or data generated in a control process in an external memory 320. The controller 318 receives the optical disc type detection signal 332 generated by the optical disc type detector 330 and determines whether the type of the optical disc 100 which is currently loaded is the organic BD-R using the optical disc type detection signal. If a determination is made that the optical disc 100 is the organic BD-R, the controller 318 controls the servo controller 316 with a tracking control polarity corresponding to the organic BD-R and reproduces data in consideration of the reflection amount characteristic (low-to-high characteristic) of the recording surface. The organic BD-R has a characteristic that reflectivity is low before data is recorded and is high after data is recorded.

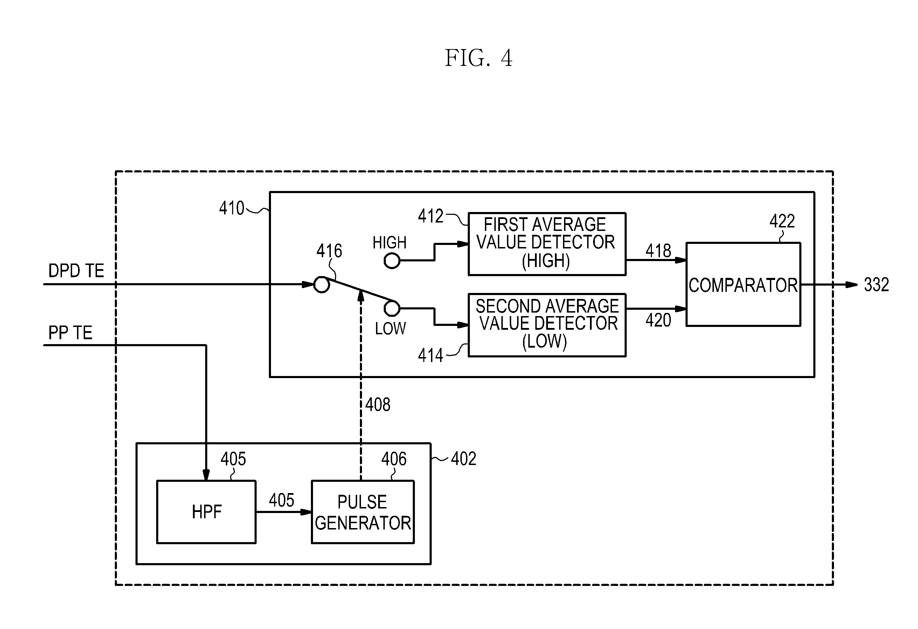

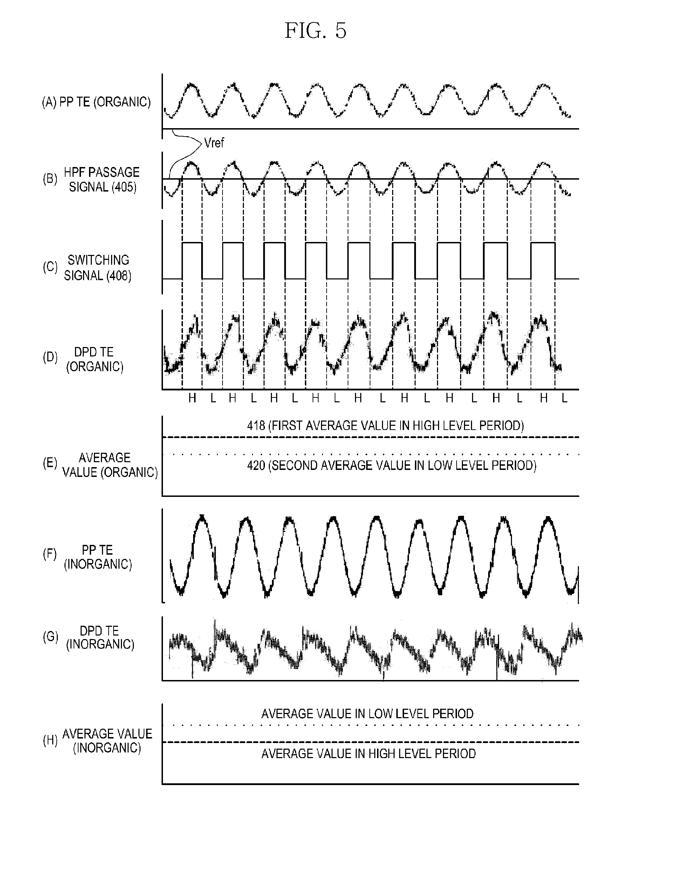

FIG. 4 is a block diagram illustrating the optical disc type detector illustrated in FIG. 3. FIG. 5 is a view illustrating detecting the type of the optical disc in the optical disc type detector illustrated in FIG. 4. The phases of the DPD TE signal and the PP DE signal of the organic optical disc on which data is recorded are equal to each other, but the phases of the DPD TE signal and the PP DE signal of the inorganic optical disc are opposite to each other. In the present embodiment, a determination is made whether the type of the optical disc is the organic optical disc, by comparison between a first average value and a second average value of the DPD TE signal of the organic optical disc. The concept of detecting the type of the optical disc according to the present general inventive concept will be described with reference to FIGS. 4 and 5.

As illustrated in FIG. 4, the optical disc type detector 330 of the present embodiment includes a switching signal generator 402 and an average value detector 410. The switching signal generator 402 includes a high pass filter (HPF) 404 and a pulse generator 406, and the average value detector 410 includes a first average value detector 412, a second average value detector 414, a switch 416, and a comparator 422.

Now, the switching signal generator 402 illustrated in FIG. 4 will be described with reference to FIGS. 5A to 5C. First, as illustrated in FIG. 5A, the PP TE signal is an AC signal having a DC level higher than a reference voltage Vref. The PP TE signal passes through the HPF 404 to eliminate a DC component as illustrated in FIG. 5B and the signal 405 passing through the HPF 404 is converted into a pulse signal illustrated in FIG. 5C using the pulse generator 406. The pulse signal is a switching signal 408 to switch the switch 416 of the average value detector 410 of FIG. 4 between a "HIGH" contact and a "LOW" contact.

Returning to FIG. 4, the average value detector 410 detects the average value of the DPD TE signal and detects the average value of the DPD TE signal in a HIGH level period and a LOW level period of the switching signal 408 having the pulse form. In FIG. 4, the first average value detector 412 outputs the average value of the DPD TE signal in the HIGH level period of the switching signal 408, that is, a first average value 418 which is the average value in the HIGH level period, and the second average value detector 414 outputs the average value of the DPD TE signal in the LOW level period of the switching signal 408, that is, a second average value 420 which is the average value in the LOW level period. When the switching signal 408 is in the HIGH level, the switch 416 is connected to the "HIGH" contact such that the DPD TE signal is input to only the first average value detector 412. Accordingly, the first average value detector 412 detects the first average value 418 in the HIGH level period denoted by "H" of FIG. 5D. In contrast, when the switching signal 408 is in the LOW level, the switch 416 is connected to the "LOW" contact such that the DPD TE signal is input to only the second average value detector 414. Accordingly, the second average detector 414 detects the second average value 420 in the LOW level period denoted by "L" of FIG. 5D. FIG. 5E illustrates the first average value 418 in the HIGH level period and the second average value 420 in the LOW level period. The first average value 418 in the HIGH level period is larger than the second average value 420 in the LOW level period. In the present general inventive concept, using this characteristic, a determination is made whether the optical disc 100 which is currently loaded is the organic BD-R or not. The comparator 422 of FIG. 4 is used to compare the first average value 418 with the second average value 420. The comparator 422 activates the disc type detection signal 332 (for example, allows the disc type detection signal 332 to have a logic value 1) if the first average value 418 in the HIGH level period is larger than the second average value 420 in the LOW level period, and the controller 318 determines that the optical disc 100 which is currently loaded is the organic BD-R, on the basis of the activation of the disc type detection signal 332.

In the inorganic BD-R, when the PP TE signal of FIG. 5F is converted into the switching signal and the average values of the DPD TE signals (FIG. 5G) in the HIGH level period and the LOW level period are detected, the average value of the DPD TE signal in the LOW level period is larger than that of the DPD TE signal in the HIGH level period as illustrated in FIG. 5H. If the optical disc 100 which is currently loaded is the inorganic optical disc, the average value in the LOW level period is larger than that in the HIGH level period in opposition to the organic BD-R. Accordingly, using this characteristic, a determination can be made that the optical disc is the inorganic B D-R.

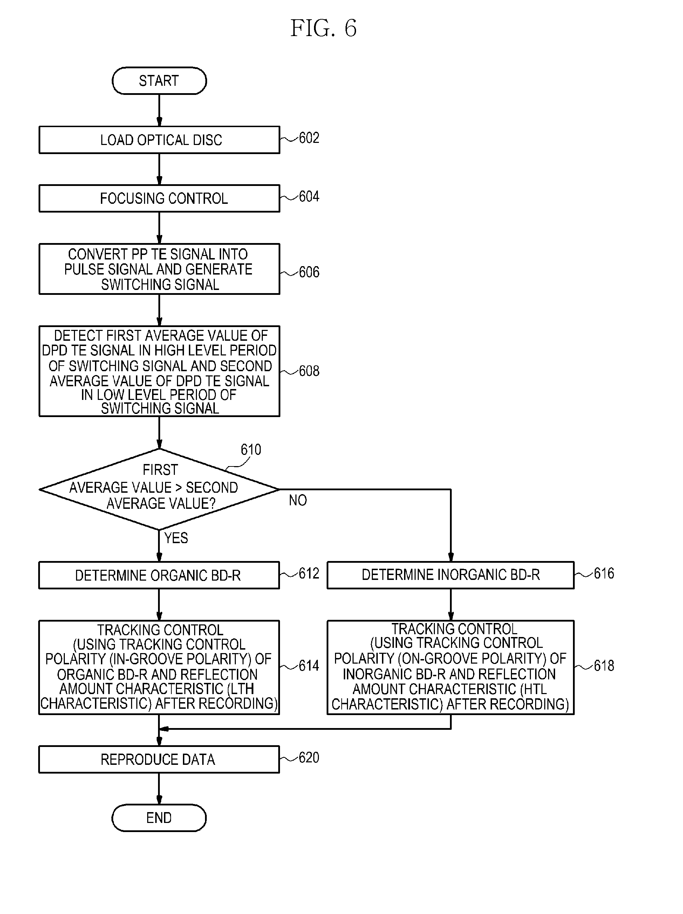

FIG. 6 is a flowchart illustrating a method of controlling an optical disc drive according to an embodiment of the present general inventive concept, that is, a method of performing focusing control, performing a series of processes of determining the type of the disc, and performing tracking control according to the type of the disc. Referring to FIGS. 4 and 6, when the optical disc 100 is loaded to the optical disc drive 302 (operation 602), the controller 318 of the optical disc drive 300 performs the focusing control for allowing the pickup module 208 to follow the surface of the data recording layer 202 while a laser is irradiated onto the surface of the data recording layer 202 of the optical disc 100 (operation 604).

When the focusing control is completed, before performing the tracking control, the optical disc type detector 330 converts the PP TE signal of the optical disc 100, which is currently loaded, into the pulse signal using the method described with reference to FIGS. 5A to 5C and generates the switching signal 408 (operation 606). The first average value 418 of the DPD TE signal in the HIGH level period of the switching signal 408 and the second average value 420 of the DPD TE signal in the LOW level period of the switching signal 408 are detected (operation 608) and the first average value 418 and the second average value 420 are compared (operation 610).

If the first average value 418 in the HIGH level period is larger than the second average value 420 in the LOW level period (Yes in Operation 610), a determination is made that the optical disc 100 which is currently loaded is the organic BD-R (operation 612). If a determination is made that the type of the disc is the organic BD-R, the tracking control is performed using the tracking control polarity (in-groove polarity) corresponding to the organic BD-R and the reflection amount characteristic (low to high characteristic) after recording (operation 614).

In contrast, if the first average value 418 in the HIGH level period is not larger than the second average value 420 in the LOW level period (No in Operation 610), a determination is made that the optical disc 100 which is currently loaded is the inorganic BD-R (operation 616). If a determination is made that the type of the disc is the inorganic BD-R, the tracking control is performed using the tracking control polarity (on-groove polarity) corresponding to the inorganic BD-R and the reflection amount characteristic (high to low characteristic) after recording (operation 618).

After the determination of the type of the disc is completed, when a data reproduction command is generated, the data recorded on the optical disc 100 (BD-R) is reproduced (operation 620). Since the phases of the PP TE signal and the DPD TE signal of the organic BD-R are equal to each other but phases of the PP TE signal and the DPD TE signal of the inorganic BD-R are opposite to each other, the tracking control polarity suitable for the type of the disc should be used in order to accurately reproduce the data recorded on the BD-R.

The present general inventive concept can also be embodied as computer-readable codes on a computer-readable medium. The computer-readable medium can include a computer-readable recording medium and a computer-readable transmission medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains.

Although various embodiments of the present general inventive concept have been illustrated and described, it would be appreciated by those skilled in the art that changes may be made in these embodiments without departing from the principles and spirit of the general inventive concept, the scope of which is defined in the claims and their equivalents.

## Claims

1. A method of controlling an optical disc drive, the method comprising:
detecting a first average value and a second average value of a differential phase detection tracking error (DPD TE) signal of a loaded optical disc; and
determining a type of the loaded optical disc by a comparison between the first average value and the second average value of the DPD TE signal.

2. The method according to claim 1, wherein the detecting of the first average value and the second average value comprises:
converting a push-pull tracking error (PP TE) signal of the loaded optical disc into a switching signal having a pulse form;
detecting the first average value of the DPD TE signal in a high level period of the switching signal; and
detecting the second average value of the DPD TE signal in a low level period of the switching signal.

3. The method according to claim 2, wherein, if the first average value is larger than the second average value, a determination is made that the type of the loaded optical disc is an organic optical disc.

4. The method according to claim 3, wherein the organic optical disc comprises:
an organic optical disc on which data is recorded.

5. The method according to claim 3, wherein the organic optical disc comprises:
an organic blu-ray disc recordable (BD-R) on which data is recorded.

6. The method according to claim 1, wherein focusing control of the loaded optical disc is performed before determining the type of the optical disc.

7. An optical disc drive, comprising:
an optical disc type detector to detect a type of a loaded optical disc by a comparison between a first average value and a second average value of a differential phase detection tracking error (DPD TE) signal of the loaded optical disc; and
a controller to reproduce data from the loaded optical disc on a basis of the detected result of the optical disc type detector.

8. The optical disc drive according to claim 7, wherein the optical disc type detector comprises:
a switching signal generator to convert a push-pull tracking error (PP TE) signal into a switching signal having a pulse form; and
an average value detector to compare the first average value of the DPD TE signal in a high level period of the switching signal and the second average value of the DPD TE signal in a low level period of the switching signal and generate an optical disc type detection signal indicating the type of the optical disc according to the compared result.

9. The optical disc drive according to claim 8, wherein the switching signal generator comprises:
a high pass filter (HPF) to eliminate a direct current (DC) component of the PP TE signal; and
a pulse generator to convert the PP TE signal, from which the DC component is eliminated, into a pulse signal.

10. The optical disc drive according to claim 8, wherein the average value detector comprises:
a first average value detector to detect the first average value;
a second average value detector to detect the second average value; and
a comparator to compare the first average value with the second average value and generate the optical disc type detection signal according to the compared result.

11. The optical disc drive according to claim 10, wherein the average value detector further comprises:
a switch which is controlled by the switching signal, allows the DPD TE signal to be input to the first average value detector when the PP TE signal is in a high level period, and
allows the DPD TE signal to be input to the second average value detector when the PP TE signal is in a low level period.

12. The optical disc drive according to claim 10, wherein the comparator activates and outputs the optical disc type detection signal when the first average value is larger than the second average value.

13. The optical disc drive according to claim 12, wherein, when the optical disc type detection signal is activated, a determination is made that the type of the loaded optical disc is an organic optical disc.

14. The optical disc drive according to claim 13, wherein the organic optical disc comprises:
an organic blu-ray disc recordable (BD-R) on which data is recorded.

15. The optical disc drive according to claim 7, wherein the controller performs focusing control of the loaded optical disc before determining the type of the optical disc.
